# EUROPÄISCHE PATENTSCHRIFT

(11) **EP 2 593 669 B1**
(45) Veröffentlichungstag und Bekanntmachung des Hinweises auf die Patenterteilung: **31.12.2014**
(21) Anmeldenummer: 11728206.1
(22) Anmeldetag: 09.06.2011
(51) Int. Cl.: F03D 11/00, F03D 1/00, H02B 3/00, H02G 5/00, H02G 5/02, H02G 5/04

(54) **VERFAHREN UND VORRICHTUNG ZUM REPARIEREN ODER AUSTAUSCHEN VON STROMSCHIENEN AN WINDKRAFTANLAGEN**
METHOD AND DEVICE FOR REPAIRING OR REPLACING BUSBARS ON WIND POWER PLANTS
PROCÉDÉ ET DISPOSITIF PERMETTANT DE RÉPARER OU REMPLACER DES RAILS CONDUCTEURS SUR DES ÉOLIENNES

(30) Priorität: 16.07.2010 DE 102010027498
(43) Veröffentlichungstag der Anmeldung: 22.05.2013
(73) Patentinhaber: Flyteg GmbH&Co. Kg, 22457 Hamburg (DE)
(72) Erfinder: WIECHERS, Jörg, 25485 Bilsen (DE)
(74) Vertreter: Vötsch, Reiner
(86) Internationale Anmeldenummer: PCT/EP2011/059596
(87) Internationale Veröffentlichungsnummer: WO 2012/007235

(56) Entgegenhaltungen:
- DE-A1- 10 305 689
- DE-A1-102008 018 790
- DE-A1-102008 058 129
- US-A1- 2006 233 645

## Beschreibung

### Stand der Technik

Die Erfindung betrifft ein Verfahren zum Reparieren oder Austauschen von Stromschienen an Windkraftanlagen nach dem Oberbegriff des Anspruchs 1. Ferner betrifft die Erfindung eine Vorrichtung zum Durchführen eines erfindungsgemäßen Verfahrens.

Aus der DE 10 2008 018 790 A1 ist eine aus mehreren Turmsegmenten bestehende Windkraftanlage bekannt, wobei innerhalb der Turmsegmente der Stromführung dienende, als vormontierte Baueinheiten ausgebildete Stromschienenelemente angeordnet sind.

Bei der Übertragung des in einem Generator im Bereich der Spitze eines Turmes einer Windkraftanlage erzeugten Stromes in eine am Sockel der Windkraftanlage angeordnete Netzstation unterscheidet man grundsätzlich zwei Methoden: Bei der ersten Methode wird der Strom über ein Kabel von dem Generator an die Netzstation übertragen. Bei der zweiten Methode findet die Stromübertragung mittels Stromschienen statt. Hierbei werden zur Überbrückung der Strecke zwischen dem Sockelbereich und dem Kopf des Turmes der Windkraftanlage üblicherweise eine Vielzahl von miteinander verbundenen bzw. verschraubten Stromschienen verwendet, die beispielsweise eine typische Länge von ca. 3m aufweisen.

Der Turm einer Windkraftanlage besteht in der Regel aus mehreren, übereinander angeordneten Turmsegmenten, die jeweils hülsenförmig ausgebildet sind. Bei der Fertigung der Windkraftanlage werden bei der zweiten Methode zur Stromübertragung die Stromschienen bereits während der Fertigung der Turmsegmente an der Innenwand des jeweiligen Turmsegments befestigt, so dass die innerhalb eines Turmsegments angeordneten bzw. befestigten Stromschienen einen Stromschienenteilbereich ausbilden. Nach dem Aufeinandersetzen der einzelnen Turmsegmente vor Ort werden die einzelnen Stromschienenteilbereiche der Turmsegmente mittels Verbindungsschienen miteinander elektrisch kontaktiert bzw. gekoppelt. Die einzelnen Stromschienen eines Stromschienenteilbereichs sind innerhalb des Turmsegments mittels einer eine Konsole aufweisenden Befestigungseinrichtung über ein als Zwischenelement dienendes Elastomerelement in einem Bolzen elastisch befestigt bzw. aufgehängt, welcher seinerseits in der Wand des Turmsegments verankert ist.

Bei der Montage und vor allem während des Betriebs der Windkraftanlage kommt es im Laufe der Zeit, zum Beispiel in Folge unterschiedlicher Wärmeausdehnungen zwischen dem aus Stahl bestehenden Turm der Windkraftanlage und den üblicherweise aus Aluminium bestehenden Stromschienen, zu mechanischen Spannungen innerhalb eines Stromschienenteilbereichs und zwischen den einzelnen Stromschienenbereichen, die durch die elastische Aufhängung der Stromschienen durch die Elastomerelemente ausgeglichen werden sollen. Darüber hinaus werden in Folge der elastischen Aufhängung der Stromschienen über die Elastomerelemente die Gewichtskräfte der einzelnen Stromschienen auf die jeweils unterhalb angeordneten Stromschienen teilweise übertragen.

Aufgrund der speziellen geometrischen Ausbildung der Stromschienen ist es ohne die Gefahr der Beschädigung einzelner Stromschienen nicht möglich, eine einzelne Stromschiene aus einem Stromschienenteilbereich aufgrund einer erforderlichen Reparatur oder eines erforderlichen Austausches zu entfernen. Es muss zunächst die oberhalb des betroffenen Stromschienenteilbereichs zum nächsten Stromschienenteilbereich angeordnete Verbindungsschiene gelöst werden. Erst anschließend kann durch Entfernen aller Stromschienen des betroffenen Stromschienenteilbereichs oberhalb der zu reparierenden bzw. auszutauschenden Stromschiene ein Austausch der zu reparierenden bzw. auszutauschenden Stromschiene erfolgen. Bei der Wiedermontage der Stromschienen eines Stromschienenteilbereichs wiederholen sich die Vorgänge in umgekehrter Reihenfolge. Aufgrund der elastischen Aufhängung der Stromschienen und der erwähnten Spannungen zwischen den Stromschienen sowie zwischen den Stromschienenteilbereichen werden bei der Wiedermontage der Stromschienen zusätzliche Spannungen in den aus den einzelnen Stromschienenteilbereichen gebildeten Stromschienenverbund eingebracht, die den Stromschienenverbund vorschädigen können. Darüber hinaus werden die Stromschienen der oberhalb der zu reparierenden bzw. auszutauschenden Stromschiene während der Reparatur bzw. des Austauschs von der Gewichtskraft von oberhalb angeordneten Stromschienen teilweise belastet, so dass sich diese um eine gewissen Wegstrecke setzen und somit ggf. die Elastomere der betreffenden Stromschienen vorschädigt werden können, was ggf. optisch nicht erkennbar ist.

### Offenbarung der Erfindung

Ausgehend von dem dargestellten Stand der Technik liegt der Erfindung die Aufgabe zugrunde, ein Verfahren zum Reparieren oder Austauschen von Stromschienen an Windkraftanlagen nach dem Oberbegriff des Anspruchs 1 derart weiterzubilden, dass eine Demontage und Montage von einzelnen Stromschienen an einer Windkraftanlage ermöglicht wird, ohne dass zusätzliche Spannungen bzw. Vorschädigungen in den aus den Stromschienen zusammengesetzten Stromschienenverbund eingebracht werden bzw. dass ein einfacher Austausch von Stromschienen ermöglicht wird. Diese Aufgabe wird bei einem Verfahren zum Reparieren oder Austauschen von Stromschienen an Windkraftanlagen mit den Merkmalen des Anspruchs 1 gelöst.

Der Erfindung liegt dabei die Idee zugrunde, die Gewichtskraft zumindest einer unmittelbar ober- bzw. unterhalb insbesondere der zu reparierenden bzw. auszutauschenden Stromschiene angeordneten Stromschiene mittels einer Entlastungseinrichtung durch Aufbringen einer Zugkraft auf die betreffende Stromschiene zu egalisieren. Dadurch werden die Eigenspannungen zwischen den einzelnen Stromschienen eines Stromschienenteilbereichs zumindest reduziert, im besten Falle vollständig aufgehoben, so dass die Stromschienen spannungsfrei entnommen bzw. demontiert und anschließend wieder montiert werden können.

Vorteilhafte Weiterbildungen des erfindungsgemäßen Verfahrens sowie deren Vorrichtung sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

In einer bevorzugten Ausführungsform der Erfindung wird es vorgeschlagen, dass die Gewichtskräfte aller Stromschienen eines Stromschienenteilbereichs, in dem sich die zu reparierende bzw. auszutauschende Stromschiene befindet, mittels der Entlastungseinrichtung egalisiert werden. Dadurch werden insbesondere nach der erfolgten Wiedermontage der Stromschienen eines Stromschienenteilbereichs Eigenspannungen zwischen den Stromschienen in dem Stromschienenteilbereich sicher vermieden.

Bei einem ganz besonders bevorzugten Verfahren wird zusätzlich vorgeschlagen, dass zusätzlich auch die Gewichtskräfte derjenigen Stromschienen der Stromschienenteilbereiche egalisiert werden, die sich unter- bzw. oberhalb des Stromschienenteilbereichs mit der zu reparierenden bzw. auszutauschenden Stromschiene befinden. Dadurch wird der gesamte Stromschienenverbund zwischen dem Generator und der Netzstation am Fuß der Windkraftanlage spannungsfrei angeordnet, so dass eventuell zwischenzeitlich in Folge des Betriebs der Windkraftanlage in dem Stromschienenverbund vorhandene Spannungen vollständig abgebaut werden können. Dadurch wird ein über einen längeren Zeitraum stattfindender, störungsfreier Betrieb der Windkraftanlage im Bereich des Stromschienenverbundes ermöglicht, da Beschädigungen in Folge von Spannungen zwischen den Stromschienen vermieden werden können.

Ganz besonders bevorzugt ist es weiterhin, wenn zumindest ein der Befestigungseinrichtung der zu reparierenden bzw. auszutauschenden Stromschiene zugeordnetes elastisches Befestigungselement zusammen mit der betreffenden Stromschiene ausgetauscht wird. Dadurch werden eventuell zukünftige Beschädigungen aufgrund eines vorgeschädigten Elastomer- bzw. Befestigungselementes vermieden.

Um sicherzustellen, dass während der Demontage der Stromschienen keine weiteren Vorschädigungen bzw. Spannungen in den Stromschienenverbund eingebracht werden bzw. derartige Spannungen bei der Wiedermontage vermieden werden, wird es in einer weiteren Ausgestaltung des erfindungsgemäßen Verfahrens vorgeschlagen, dass die Egalisierung der Gewichtskräfte der Stromschienen durch Entlasten der Stromschienen aus Richtung der Generatoreinrichtung in Richtung der Netzstation erfolgt, indem die Gewichtskräfte der Stromschienen nacheinander egalisiert werden und, dass nach Abschluss der Reparatur bzw. des Austauschs der Stromschiene die Gewichtsbelastung der Stromschienen infolge ihres Eigengewichts aus Richtung der Netzstation in Richtung der Generatoreinrichtung erfolgt, indem die Stromschienen nacheinander mit der Entlastungseinrichtung außer Wirkverbindung gebracht werden.

Eine bevorzugte Vorrichtung zum Durchführen eines erfindungsgemäßen Verfahrens umfasst eine Entlastungseinrichtung, die mit der Befestigungseinrichtung einer Stromschiene verbindbar ist und die wenigstens eine Spanneinrichtung aufweist, mit der die Gewichtskraft einer Stromschiene egalisierbar ist.

Bei einer ersten konstruktiven Ausführungsform, die sich zur Reparatur einzelner Stromschienen eines Stromschienenteilbereichs eignet, ist es vorgesehen, dass die Entlastungseinrichtung an einem Befestigungsbolzen zur Befestigung der Befestigungseinrichtung für die Stromschiene festlegbar ist.

Bei einer bevorzugten konstruktiven Ausgestaltung der Vorrichtung, die insbesondere dazu geeignet ist, den gesamten Stromschienenverbund einer Windkraftanlage gewichtsfrei anzuordnen, um beispielsweise Eigenspannungen aller Stromschienen zu eliminieren bzw. einen Austausch aller Elastomere bzw. Befestigungseinrichtungen der Windkraftanlage zu ermöglichen, ist es vorgesehen, dass die Entlastungseinrichtung wenigstens ein Tragmittel aufweist, das insbesondere am oberen Bereich des Turms der Windkraftanlage festlegbar ist und, dass das wenigstens eine Tragmittel für eine Vielzahl von Stromschienen, vorzugsweise für alle Stromschienen, jeweils wenigstens eine Spanneinrichtung zur Gewichtsegalisierung aufweist, die mit der Befestigungseinrichtung der Stromschiene verbindbar ist.

Um das Einbringen von Querkräften in die Stromschienen zu vermeiden ist es weiterhin vorteilhaft, wenn die Entlastungseinrichtung für jede Stromschiene zwei mit der Befestigungseinrichtung verbindbare Spanneinrichtungen aufweist und wenn die beiden Spanneinrichtungen symmetrisch zur Längsachse der Stromschiene angeordnet sind.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen stark vereinfachten Längsschnitt durch eine Windkraftanlage,
- Fig. 2: eine teilweise geschnittene Vorderansicht im Bereich der Verbindungsstelle zweier Stromschienen innerhalb der Windkraftanlage nach Fig. 1 mit einer ersten erfindungsgemäßen Entlastungseinrichtung,
- Fig. 3: die erste erfindungsgemäße Entlastungseinrichtung in vereinfachter Darstellung,
- Fig. 4: eine Seitenansicht auf eine zweite erfindungsgemäße Entlastungseinrichtung und
- Fig. 5: eine Vorderansicht auf die zweite erfindungsgemäße Entlastungseinrichtung gemäß Fig. 4.

Gleiche Bauteile bzw. Bauteile mit gleicher Funktion sind in den Figuren mit den gleichen Bezugsziffern versehen.

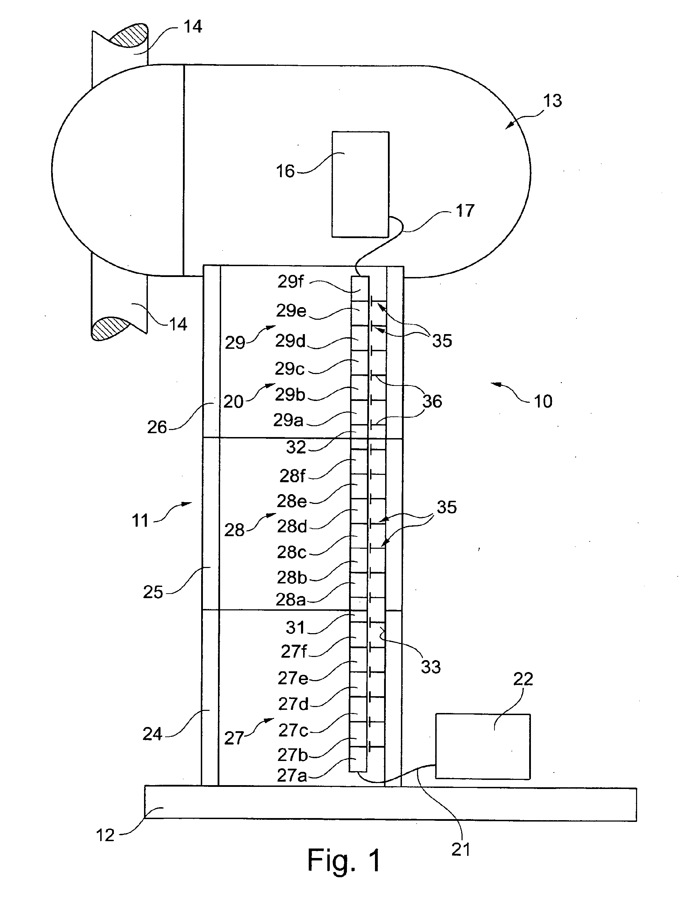

In der Fig. 1 ist der grundsätzliche Aufbau einer Windkraftanlage 10 stark vereinfacht dargestellt. Die Windkraftanlage 10 weist einen Turm 11 auf, der auf einem Sockel 12 angeordnet ist. An der Spitze des Turms 11 ist eine Gondel 13 angeordnet, in der unter anderem die Rotorblätter 14 drehbeweglich angeordnet sind. Innerhalb der Gondel 13 befindet sich ein Generator 16. Der Generator 16 ist mit einer oberen Verbindungsleitung 17 oder einem oberen Anschluss mit einem Stromschienenverbund 20 gekoppelt. Der Stromschienenverbund 20 ist hierbei insbesondere über die gesamte Länge bzw. Höhe des Turmes 11 angeordnet. Im Bereich des Sockels 12 des Turmes 11 ist der Stromschienenverbund 20 mittels einer weiteren, unteren Verbindungsleitung 21 bzw. einer unteren Verbindung mit einer Netzstation 22 verbunden.

Der Turm 11 besteht beispielhaft aus drei übereinander angeordneten, jeweils hülsenartigen Turmsegmenten 24 bis 26. Ein derartiges Turmsegment 24 bis 26 weist dabei eine typische Länge von etwa 20m auf, so dass die Gesamthöhe des Turmes 11 etwa 60m beträgt. Der Stromschienenverbund 20 wird bereits bei der Fertigung der Turmsegmente 24 bis 26 innerhalb der einzelnen Turmsegmente 24 bis 26 angeordnet bzw. befestigt. Hierzu besteht der Stromschienenverbund 20 innerhalb jedes Turmsegments 24 bis 26 aus einem Stromschienenteilbereich 27 bis 29. jeder Stromschienenteilbereich 27 bis 29 besteht wiederum aus mehreren, beispielsweise ca. 3m langen Stromschienen 27a bis 27f, 28a bis 28f und 29a bis 29f.

Zwischen den einzelnen Stromschienenteilbereichen 27 und 28 sind die jeweils obersten Stromschienen 27f und 28f mit den jeweils unteren Stromschienen 28a und 29a der oberhalb angeordneten Stromschienenteilbereiche 28 und 29 mittels Verbindungsschienen 31, 32 elektrisch leitend verbunden.

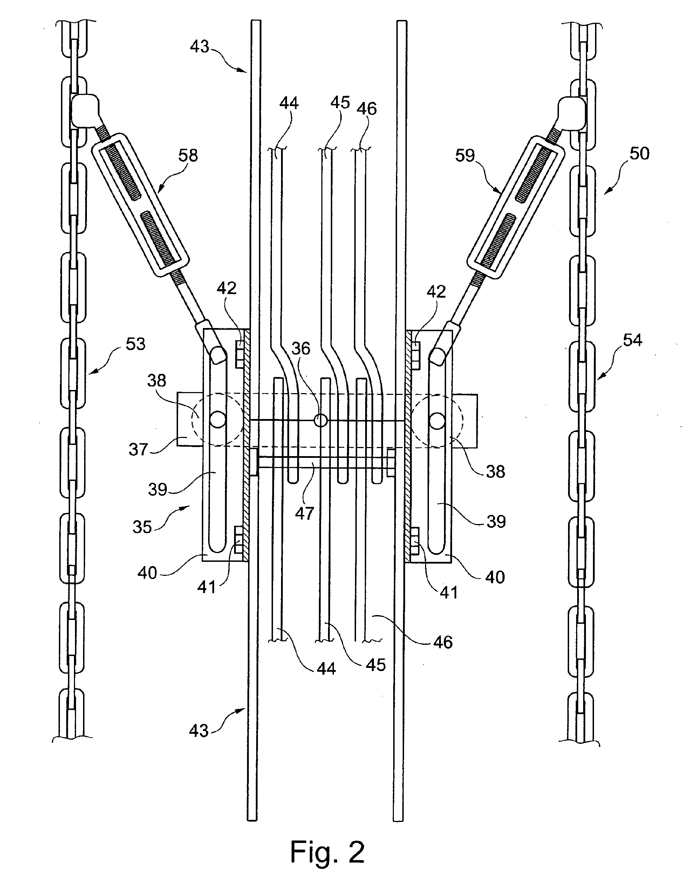

Jeweils zwei aufeinander folgende Stromschienen 27a bis 27f, 28a bis 28f und 29a bis 29f sind mittels einer in der Fig. 2 erkennbaren Befestigungseinrichtung 35 an der Innenwand 33 des Turms 11 befestigt. Hierzu ist an der Innenwand 33 des Turms 11 ein Konsolenbolzen 36 fest verankert, der die eigentliche Befestigungseinrichtung 35 trägt. Die Befestigungseinrichtung 35 weist einen quer zu den Stromschienen 27a bis 27f, 28a bis 28f und 29a bis 29f angeordneten Konsolenwinkel 37 auf, der beidseitig zu den Stromschienen 27a bis 27f, 28a bis 28f und 29a bis 29f jeweils ein als Elastomerelement 38 ausgebildetes Koppelelement trägt. Das insbesondere zylinderförmig ausgebildete Elastomerelement 38 ist im Bereich eines Langlochs 39 mit einem Befestigungswinkel 40 verbunden, wobei die beiden beidseitig der Stromschienen 27a bis 27f, 28a bis 28f und 29a bis 29f angeordneten Befestigungswinkel 40 wiederum über Schraubverbindungen 41, 42 mit den jeweiligen Stromschienen 27-1 bis 27-6, 28-1 bis 28-6 und 29-1 bis 29-6 verbunden sind.

Wie insbesondere aus der Fig. 2 hervorgeht, weisen die Stromschienen 27a bis 27f, 28a bis 28f und 29a bis 29f jeweils ein Stromschienengehäuse 43 auf, in dem jeweils die einzelnen Stromleiter 44 bis 46, die insbesondere aus Aluminium bestehen und einen rechteckigen Querschnitt aufweisen, angeordnet sind. Die Stromleiter 44 bis 46 sind im Verbindungsbereich der Stromschienen 27a bis 27f, 28a bis 28f und 29a bis 29f mittels eines Querbolzens 47 unter Zwischenlage von nicht dargestellten Isolatoren kraftschlüssig miteinander verbunden, um den Stromfluss innerhalb der Stromleiter 44 bis 46 sicherzustellen.

Zur Reparatur oder zum Austauschen einzelner Stromschienen 27a bis 27f, 28a bis 28f und 29a bis 29f ist es sinnvoll, jeweils zusätzlich alle Stromschienen 27a bis 27f, 28a bis 28f und 29a bis 29f eines Stromschienenteilbereichs 27, 28, 29 oberhalb der jeweils zu reparierenden bzw. auszutauschenden Stromschiene 27a bis 27f, 28a bis 28f und 29a bis 29f zu entfernen. Hierzu muss zunächst in einem ersten Arbeitsschritt ggf. die jeweils oberhalb des Stromschienenteilbereichs 27 bzw. 28 angeordnete Verbindungsschiene 31 bzw. 32 entfernt werden.

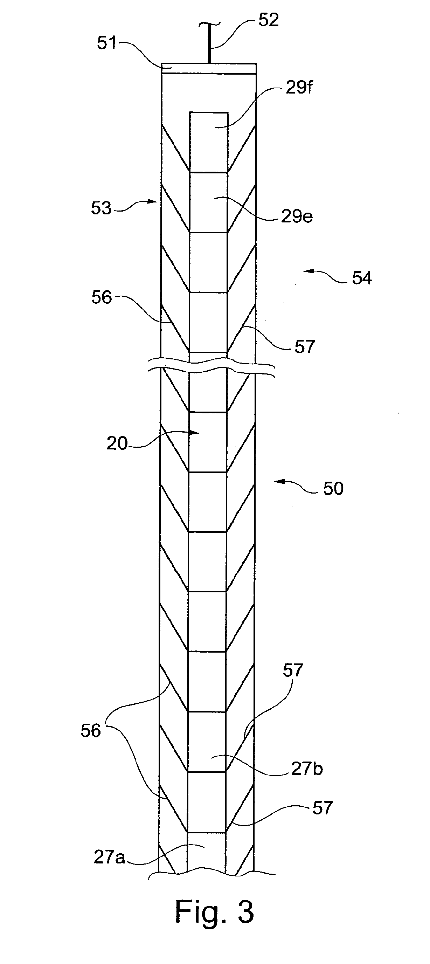

Um bei der Reparatur bzw. dem Austausch einer Stromschiene 27a bis 27f, 28a bis 28f und 29a bis 29f einen spannungsfreien, von den über die Elastomerelemente 38 in die Stromschienenteilbereiche 27 bis 29 übertragenen Gewichtskräfte der Stromschienen 27a bis 27f, 28a bis 28f und 29a bis 29f unbeeinflussten Aus- bzw. Einbau der Stromschienen 27a bis 27f, 28a bis 28f und 29a bis 29f zu ermöglichen, dient eine in den Fig. 2 und 3 vereinfacht dargestellte Vorrichtung mit einer ersten Entlastungseinrichtung 50.

Hierbei dient die erste Entlastungseinrichtung 50 bevorzugt dazu, alle Stromschienen 27a bis 27f, 28a bis 28f und 29a bis 29f gleichzeitig zumindest teilweise gewichtsfrei anzuordnen, um insbesondere eine spannungsarme, vorzugsweise eine spannungsfreie Gesamtausrichtung bzw. Neuausrichtung der Stromschienen 27a bis 27f, 28a bis 28f und 29a bis 29f innerhalb des Turms 11 zu ermöglichen. Dabei können vorzugsweise gleichzeitig die Elastomerelemente 38 der Befestigungseinrichtungen 35 ausgetauscht werden, so dass eventuell aufgrund von zwischenzeitlich aufgetretenen Spannungen vorgeschädigte Elastomerelemente 38 während des weiteren Betriebs keine Störungen bzw. Schädigungen verursachen können.

Hierzu weist die erste Entlastungseinrichtung 50 eine Quertraverse 51 auf, die mittels eines lediglich symbolisch angedeuteten Kettenzuges 52 insbesondere im Maschinenträger der Gondel 13 befestigt ist. Beidseitig des Stromschienenverbundes 20 ist an der Quertraverse 51 jeweils eine Lastkette 53, 54 angeordnet. Jeder Stromschiene 27a bis 27f, 28a bis 28f und 29a bis 29f sind zwei Spanneinrichtungen 56, 57, insbesondere in Form von Spannschlössern 58, 59 zugeordnet. Hierbei ist jedes der Spannschlösser 58, 59 mit einem Langloch 39 eines Befestigungswinkels 40 verbindbar. Die Anordnung der Lastketten 53, 54 ist symmetrisch zur Längsachse der Stromschienen 27a bis 27f, 28a bis 28f und 29a bis 29f, damit eventuell über die Spanneinrichtungen 56, 57 eingeleitete Querkräfte egalisiert werden können.

Das Gewichtsfreistellen des Stromschienenverbundes 20 erfolgt derart, dass beginnend von der obersten, im Turm 11 angeordneten Stromschiene 29f die Stromschienen 29e bis 29a, 28f bis 28a und 27f bis 27a in Richtung des Sockels 12 mittels der Spanneinrichtungen 56, 57 nacheinander gewichtsfreigestellt werden. Hierzu wird die Lage der einzelnen Stromschienen 27a bis 27f, 28a bis 28f und 29a bis 29f bzw. der Befestigungseinrichtungen 35 überprüft, bis sichergestellt ist, dass mittels der Spanneinrichtungen 56, 57 die Gewichtskraft der jeweiligen Stromschiene 27a bis 27f, 28a bis 28f und 29a bis 29f ausgeglichen bzw. kompensiert ist. Sobald dies bei allen Stromschienen 27a bis 27f, 28a bis 28f und 29a bis 29f erfolgt ist, ist der gesamte Stromschienenverbund 20 spannungsfrei, so dass insbesondere die Elastomerelemente 38 an den einzelnen Stromschienen 27a bis 27f, 28a bis 28f und 29a bis 29f ausgetauscht werden können. Nach Austausch der Elastomerelemente 38, werden die einzelnen Stromschienen 27a bis 27f, 28a bis 28f und 29a bis 29f in umgekehrter Reihenfolge, d.h. aus Richtung des Sockels 12 in Richtung der Gondel 13, wieder mit ihrem Eigengewicht belastet, indem die jeweiligen Spanneinrichtungen 56, 57 entfernt werden.

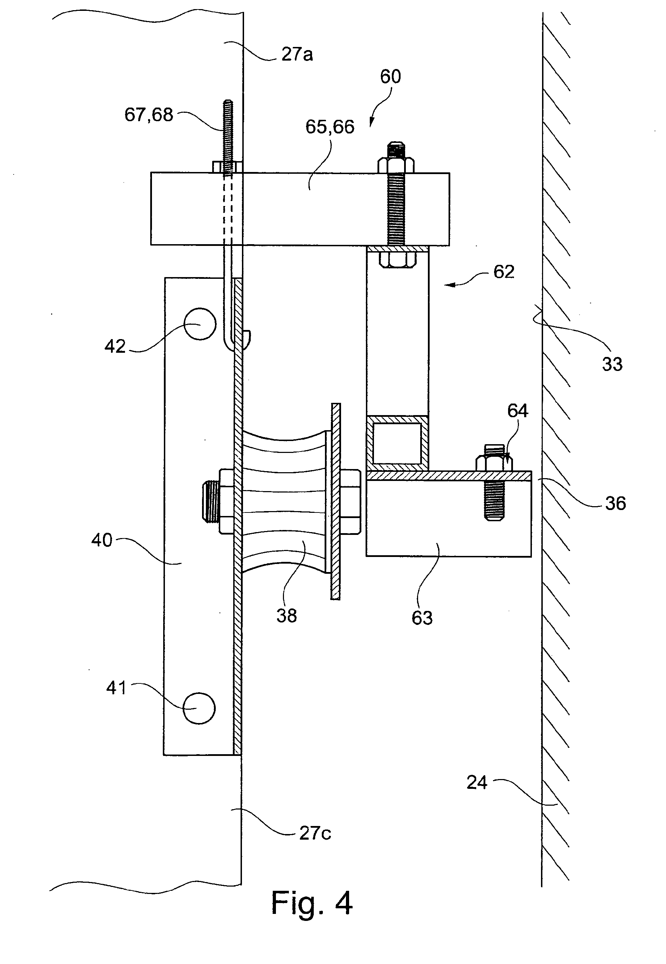

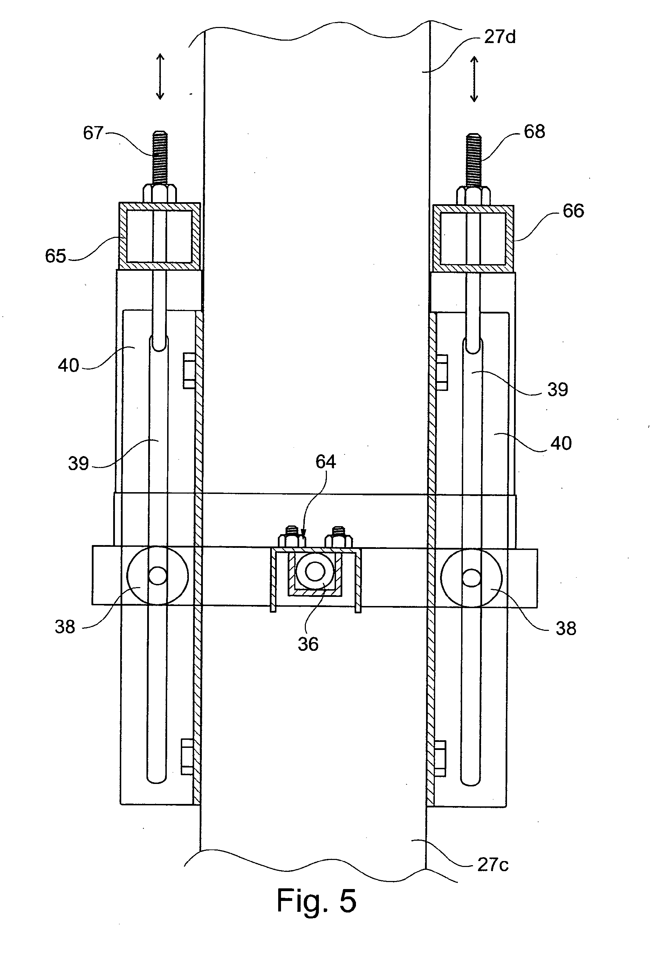

In den Fig. 4 und 5 ist eine abgewandelte Vorrichtung mit einer zweiten Entlastungseinrichtung 60 dargestellt. Die zweite Entlastungseinrichtung 60 dient dazu, einzelne Stromschienen 27a bis 27f, 28a bis 28f und 29a bis 29f eines Stromschienenteilbereichs 27 bis 29 auszutauschen bzw. zu reparieren. Hierzu weist die zweite Entlastungseinrichtung 60 eine Stützkonstruktion 62 auf, die beispielhaft einen U-förmigen Träger 63 umfasst, der auf einen Konsolenbolzen 36 festlegbar bzw. befestigbar ist. Hierzu dient eine einen Spannbolzen aufweisende Spanneinrichtung 64. Die Stützkonstruktion 62 weist ferner zwei, beidseitig der Stromschienen 27a bis 27f, 28a bis 28f und 29a bis 29f angeordnete Querträger 65, 66 auf. An den Querträgern 65, 66 ist jeweils ein Zugbolzen 67, 68 axial verstellbar angeordnet, der in das jeweilige Langloch 39 eines Befestigungswinkels 40 eingreift.

Bei der Reparatur bzw. dem Austausch einzelner Stromschienen 27a bis 27f, 28a bis 28f und 29a bis 29f in einem Stromschienenteilbereich 27 bis 29 kommen in der Regel mehrere zweite Entlastungseinrichtungen 60 gleichzeitig zum Einsatz, die mit zumindest der unmittelbar oberhalb bzw. unterhalb der auszutauschenden bzw. zu reparierenden Stromschiene 27a bis 27f, 28a bis 28f und 29a bis 29f über die jeweilige Befestigungseinrichtung 35 verbunden werden, um die betreffende Stromschiene 27a bis 27f, 28a bis 28f und 29a bis 29f zumindest teilweise, vorzugsweise vollständig gewichtsfrei zu stellen. Insbesondere werden bei dem Wiederzusammensetzen der einzelnen Stromschienen 27a bis 27f, 28a bis 28f und 29a bis 29f diese nach der Montage jeweils kraftfrei gestellt, bevor die jeweils nächste, obere Stromschiene 27b bis 27f, 28a bis 28f bzw. 29a bis 29f montiert wird.

Die soweit beschriebenen Entlastungseinrichtungen 50 bzw. 60 können in vielfältiger Art und Weise abgewandelt bzw. modifiziert werden, ohne vom Erfindungsgedanken abzuweichen. Wesentlich ist lediglich, dass diese zum zumindest teilweise, vorzugsweise zur gesamten Gewichtsfreistellung von Stromschienen 27a bis 27f, 28a bis 28f und 29a bis 29f geeignet sind. Ferner wird erwähnt, dass der Turm 11 auch andere Dimensionen aufweisen kann als beschrieben und dargestellt. So ist es beispielsweise möglich, dass der Turm 11 eine Höhe von etwa 80m aufweist und aus mehr (oder weniger) Turmsegmenten aufgebaut ist.

Weiterhin sei erwähnt, dass die Erfindung in den Ausführungsbeispielen anhand eines Austausches bzw. einer Reparatur von Stromschienen 27a bis 27f, 28a bis 28f und 29a bis 29f beschrieben wurde. Es liegt jedoch auch im Rahmen der Erfindung, die Entlastungseinrichtungen 50, 60 zur Erstmontage der Stromschienen 27a bis 27f, 28a bis 28f und 29a bis 29f zu verwenden, und nach deren Montage die Entlastungseinrichtungen 50, 60 aus der Windkraftanlage 10 zu entfernen.

## Patentansprüche

1. Verfahren zum Reparieren oder Austauschen von Stromschienen (27a bis 27f, 28a bis 28f, 29a bis 29f) an Windkraftanlagen (10), bei dem eine Stromverbindung zwischen einer an einem oberen Bereich der Windkraftanlage (10) angeordneten Generatoreinrichtung (16) und einer Netzstation (22) aus mehreren, jeweils eine bestimmte Anzahl von miteinander verbundenen Stromschienen (27a bis 27f, 28a bis 28f, 29a bis 29f) aufweisenden Stromschienenteilbereichen (27, 28, 29) besteht, wobei die Stromschienen (27a bis 27f, 28a bis 28f, 29a bis 29f) mittels Befestigungseinrichtungen (35) an einer Innenwand (13) eines aus übereinander angeordneten, röhrenförmigen Segmenten (24 bis 26) bestehenden Turms (11) der Windkraftanlage (10) befestigt sind, wobei die Stromschienenteilbereiche (27, 28, 29) elektrisch leitend mittels Verbindungsschienen (31, 32) verbunden sind, die jeweils eine obere Stromschiene (27f, 28f) eines unteren Stromschienenteilbereichs (27, 28) mit einer unteren Stromschiene (28a, 29a) eines oberen Stromschienenteilbereichs (28, 29) verbindet, wobei die zu reparierende bzw. auszutauschende Stromschiene (27a bis 27f, 28a bis 28f, 29a bis 29f) aus ihrem jeweiligen Stromschienenteilbereich (27, 28, 29) durch Entfernen der über ihr angeordneten Stromschienen (27a bis 27f, 28a bis 28f, 29a bis 29f) ihres Stromschienenteilbereichs (27, 28, 29) sowie der zugeordneten Verbindungsschiene (31, 32) freigelegt und ggf. entfernt wird, und wobei nach der Reparatur bzw. dem Austausch der Stromschienenteilbereich (27, 28, 29) durch Einsetzen der entfernten Stromschienen (27a bis 27f, 28a bis 28f, 29a bis 29f) in umgekehrter Reihenfolge wieder hergestellt wird,
**dadurch gekennzeichnet,**
**dass** die Gewichtskraft zumindest einer unmittelbar ober- bzw. unterhalb der zu reparierenden bzw. auszutauschenden Stromschiene (27a bis 27f, 28a bis 28f, 29a bis 29f) angeordneten Stromschiene (27a bis 27f, 28a bis 28f, 29a bis 29f) mittels einer Entlastungseinrichtung (50; 60) durch Aufbringen einer Zugkraft auf die betreffende Stromschiene (27a bis 27f, 28a bis 28f, 29a bis 29f) egalisiert wird.

2. Verfahren nach Anspruch 1,
**dadurch gekennzeichnet,**
**dass** die Gewichtskräfte aller Stromschienen (27a bis 27f, 28a bis 28f, 29a bis 29f) eines Stromschienenteilbereichs (27, 28, 29), in dem sich die zu reparierende bzw. auszutauschende Stromschiene (27a bis 27f, 28a bis 28f, 29a bis 29f) befindet, mittels der Entlastungseinrichtung (50; 60) egalisiert werden.

3. Verfahren nach Anspruch 2,
**dadurch gekennzeichnet,**
**dass** zusätzlich auch die Gewichtskräfte derjenigen Stromschienen (27a bis 27f, 28a bis 28f, 29a bis 29f) der Stromschienenteilbereiche (27, 28, 29) egalisiert werden, die sich unter- bzw. oberhalb des Stromschienenteilbereichs (27, 28, 29) mit der zu reparierenden bzw. auszutauschenden Stromschiene (27a bis 27f, 28a bis 28f, 29a bis 29f) befinden.

4. Verfahren nach einem der Ansprüche 1 bis 3,
**dadurch gekennzeichnet,**
**dass** zumindest ein der Befestigungseinrichtung (35) der zu reparierenden bzw. auszutauschenden Stromschiene (27a bis 27f, 28a bis 28f, 29a bis 29f) zugeordnetes elastisches Befestigungselement (38) zusammen mit der betreffenden Stromschiene (27a bis 27f, 28a bis 28f, 29a bis 29f) ausgetauscht wird.

5. Verfahren nach einem der Ansprüche 1 bis 4,
**dadurch gekennzeichnet,**
**dass** die Egalisierung der Gewichtskräfte der Stromschienen (27a bis 27f, 28a bis 28f, 29a bis 29f) durch Entlasten der Stromschienen (27a bis 27f, 28a bis 28f, 29a bis 29f) aus Richtung der Generatoreinrichtung (16) in Richtung der Netzstation (22) erfolgt, indem die Gewichtskräfte der Stromschienen (27a bis 27f, 28a bis 28f, 29a bis 29f) nacheinander egalisiert werden und, dass nach Abschluss der Reparatur bzw. des Austauschs der Stromschiene (27a bis 27f, 28a bis 28f, 29a bis 29f) die Gewichtsbelastung der Stromschienen (27a bis 27f, 28a bis 28f, 29a bis 29f) infolge ihres Eigengewichts aus Richtung der Netzstation (22) in Richtung der Generatoreinrichtung (16) erfolgt, indem die Stromschienen (27a bis 27f, 28a bis 28f, 29a bis 29f) nacheinander mit der Entlastungseinrichtung (50; 60) außer Wirkverbindung gebracht werden.

6. Vorrichtung zum Durchführen eines Verfahrens zum Reparieren oder Austauschen von Stromschienen an Windkraftanlagen nach einem der Ansprüche 1 bis 5,
**dadurch gekennzeichnet,**
**dass** eine Entlastungseinrichtung (50; 60) vorgesehen ist, die mit der Befestigungseinrichtung (35) einer Stromschiene (27a bis 27f, 28a bis 28f, 29a bis 29f) verbindbar ist und die wenigstens eine Spanneinrichtung (56, 57) aufweist, mit der die Gewichtskraft einer Stromschiene (27a bis 27f, 28a bis 28f, 29a bis 29f) durch Aufbringen einer Zugkraft auf die Stromschiene (27a bis 27f, 28a bis 28f, 29a bis 29f) egalisierbar ist.

7. Vorrichtung nach Anspruch 6,
**dadurch gekennzeichnet,**
**dass** die Entlastungseinrichtung (60) an einem Befestigungsbolzen (36) zur Befestigung der Befestigungseinrichtung (35) für die Stromschiene (27a bis 27f, 28a bis 28f, 29a bis 29f) festlegbar ist.

8. Vorrichtung nach Anspruch 6,
**dadurch gekennzeichnet,**
**dass** die Entlastungseinrichtung (50) wenigstens ein Tragmittel (53, 54) aufweist, das insbesondere am oberen Bereich des Turms (11) oder der Generatoreinrichtung (16) der Windkraftanlage (10) festlegbar ist und, dass das wenigstens eine Tragmittel (53, 54) für eine Vielzahl von Stromschienen (27a bis 27f, 28a bis 28f, 29a bis 29f), vorzugsweise für alle Stromschienen (27a bis 27f, 28a bis 28f, 29a bis 29f), jeweils wenigstens eine Spanneinrichtung (56, 57) zur Gewichtsegalisierung aufweist, die mit der Befestigungseinrichtung (35) der jeweiligen Stromschiene (27a bis 27f, 28a bis 28f, 29a bis 29f) verbindbar ist.

9. Vorrichtung nach einem der Ansprüche 6 bis 8,
**dadurch gekennzeichnet,**
**dass** die Entlastungseinrichtung (50; 60) für jede Stromschiene (27a bis 27f, 28a bis 28f, 29a bis 29f) zwei mit der Befestigungseinrichtung (35) verbindbare Spanneinrichtungen (56, 57) aufweist und dass die beiden Spanneinrichtungen (56, 57) symmetrisch zur Längsachse der Stromschiene (27a bis 27f, 28a bis 28f, 29a bis 29f) angeordnet sind.

10. Anordnung, bestehend aus einer Windkraftanlage (10) mit einer Vielzahl von Stromschienen (27a bis 27f, 28a bis 28f, 29a bis 29f) und wenigstens einer Vorrichtung nach einem der Ansprüche 6 bis 9.

## Claims

1. A method for repairing or replacing busbars (27a to 27f, 28a to 28f, 29a to 29f) on wind power plants (10), in the case of which a power connection between a generator arrangement (16), which is arranged in an upper region of the wind power plant (10) and a substation (22) consists of a plurality of busbar subregions (27, 28, 29), which in each case comprise a certain number of mutually interconnected busbars (27a to 27f, 28a to 28f, 29a to 29f), wherein the busbars (27a to 27f, 28a to 28f, 29a to 29f) are fixed by means of fixing arrangements (35) to an inner wall (13) of a tower (11) of the wind power plant (10), which consists of tubular segments (24 to 26), which are arranged on top of one another, wherein the busbar subregions (27, 28, 29) are connected in an electroconductive manner by means of connector bars (31, 32), which in each case connects an upper busbar (27f, 28f) of a lower busbar subregion (27, 28) to a lower busbar (28a, 29a) of an upper busbar subregion (28, 29), wherein the busbar (27a to 27f, 28a to 28f, 29a to 29f), which is to be repaired or replaced, respectively, is exposed and removed, if necessary, from its respective busbar subregion (27, 28, 29) by removing the busbar (27a to 27f, 28a to 28f, 29a to 29f) of its busbar subregion (27, 28, 29) located thereabove, as well as the assigned connector bar (31, 32), and wherein the busbar subregion (27, 28, 29) is set up again by inserting the removed busbars (27a to 27f, 28a to 28f, 29a to 29f) in reverse order after the repair or the replacement, respectively,
**characterized in**
**that** the weight of at least one busbar (27a to 27f, 28a to 28f, 29a to 29f), which is arranged directly above or below the busbar (27a to 27f, 28a to 28f, 29a to 29f), which is to be repaired or replaced, respectively, is equalized by means of a relief arrangement (50; 60), by applying a tensile force to the relevant busbar (27a to 27f, 28a to 28f, 29a to 29f).

2. The method according to claim 1,
**characterized in**
**that** the weights of all of the busbars (27a to 27f, 28a to 28f, 29a to 29f) of a busbar subregion (27, 28, 29), in which the busbar (27a to 27f, 28a to 28f, 29a to 29f), which is to be repaired or replaced, respectively, is located, are equalized by means of the relief arrangement (50; 60).

3. The method according to claim 2,
**characterized in**
**that**, in addition, the weights of those busbars (27a to 27f, 28a to 28f, 29a to 29f) of the busbar subregions (27, 28, 29), which are located below or above, respectively, the busbar subregion (27, 28, 29) comprising the busbar (27a to 27f, 28a to 28f, 29a to 29f), which is to be repaired or replaced, respectively, are also equalized.

4. The method according to one of claims 1 to 3, **characterized in**
**that** at least one elastic fixing element (38), which is assigned to the fixing arrangement (35) of the busbar (27a to 27f, 28a to 28f, 29a to 29f), which is to be repaired or replaced, respectively, is replaced together with the respective busbar (27a to 27f, 28a to 28f, 29a to 29f).

5. The method according to one of claims 1 to 4, **characterized in**
**that** the equalization of the weights of the busbars (27a to 27f, 28a to 28f, 29a to 29f) is carried out by relieving the busbars (27a to 27f, 28a to 28f, 29a to 29f) from the direction of the generator arrangement (16) in the direction of the substation (22), in that the weights of the busbars (27a to 27f, 28a to 28f, 29a to 29f) are equalized successively and that the weight loading of the busbars (27a to 27f, 28a to 28f, 29a to 29f) takes place from the direction of the substation (22) in the direction of the generator arrangement (16) as a result of its dead weight after the repair or the replacement of the busbar (27a to 27f, 28a to 28f, 29a to 29f) has been finalized, in that the busbars (27a to 27f, 28a to 28f, 29a to 29f) are operatively disconnected from the relief arrangement (50; 60) successively.

6. A device for carrying out a method for repairing or replacing busbars on wind power plants according to one of claims 1 to 5,
**characterized in**
**that** provision is made for a relief arrangement (50; 60), which can be connected to the fixing arrangement (35) of a busbar (27a to 27f, 28a to 28f, 29a to 29f) and which encompasses at least one clamping arrangement (56, 57), by means of which the weight of a busbar (27a to 27f, 28a to 28f, 29a to 29f) can be equalized by applying a tensile force to the busbar (27a to 27f, 28a to 28f, 29a to 29f).

7. The device according to claim 6,
**characterized in**
**that** the relief arrangement (60) can be fixed to a fixing bolt (36) for fixing the fixing arrangement (35) for the busbar (27a to 27f, 28a to 28f, 29a to 29f).

8. The device according to claim 6,
**characterized in**
**that** the relief arrangement (50) encompasses at least one support means (53, 54), which can in particular be fixed to the upper region of the tower (11) or of the generator arrangement (16) of the wind power plant (10) and that, for a plurality of busbars (27a to 27f, 28a to 28f, 29a to 29f), preferably for all busbars (27a to 27f, 28a to 28f, 29a to 29f), the at least one support means (53, 54) in each case encompasses at least one clamping arrangement (56, 57) for weight equalization, which can be connected to the fixing arrangement (35) of the respective busbar (27a to 27f, 28a to 28f, 29a to 29f).

9. The device according to one of claims 6 to 8, **characterized in**
**that**, for each busbar (27a to 27f, 28a to 28f, 29a to 29f), the relief arrangement (50; 60) encompasses two clamping arrangements (56, 57), which can be connected to the fixing arrangement (35) and that the two clamping arrangements (56, 57) are arranged symmetrically to the longitudinal axis of the busbar (27a to 27f, 28a to 28f, 29a to 29f).

10. An arrangement, consisting of a wind power plant (10) comprising a plurality of busbars (27a to 27f, 28a to 28f, 29a to 29f) and at least one device according to one of claims 6 to 9.

## Revendications

1. Procédé pour réparer ou remplacer des rails conducteurs (27a à 27f, 28a à 28f, 29a à 29f) sur des éoliennes (10), dans lequel une connexion électrique entre un dispositif générateur (16) disposé au niveau d'une région supérieure de l'éolienne (10) et un poste de réseau (22) se compose de plusieurs régions partielles de rails conducteurs (27, 28, 29) présentant à chaque fois un nombre déterminé de rails conducteurs (27a à 27f, 28a à 28f, 29a à 29f) connectés les uns aux autres, les rails conducteurs (27a à 27f, 28a à 28f, 29a à 29f) étant fixés au moyen de dispositifs de fixation (35) à une paroi interne (13) d'une tour (11) de l'éolienne (10) constituée de segments de forme tubulaire disposés les uns au-dessus des autres (24 à 26), les régions partielles de rails conducteurs (27, 28, 29) étant connectées de manière électriquement conductrice au moyen de rails de connexion (31, 32) qui relient à chaque fois un rail conducteur supérieur (27f, 28f) d'une région partielle de rail conducteur inférieure (27, 28) à un rail conducteur inférieur (28a, 29a) d'une région partielle de rail conducteur supérieure (28, 29), le rail conducteur à réparer ou à remplacer (27a à 27f, 28a à 28f, 29a à 29f) étant exposé et éventuellement enlevé de sa région partielle de rail conducteur respective (27, 28, 29) par enlèvement des rails conducteurs disposés au-dessus de lui (27a à 27f, 28a à 28f, 29a à 29f) de sa région partielle de rail conducteur (27, 28, 29) et du rail de connexion associé (31, 32), et après la réparation ou le remplacement, la région partielle de rail conducteur (27, 28, 29) étant reformée dans l'ordre inverse par insertion des rails conducteurs enlevés (27a à 27f, 28a à 28f, 29a à 29f),
**caractérisé en ce que**
le poids d'au moins un rail conducteur (27a à 27f, 28a à 28f, 29a à 29f) disposé directement au-dessus ou en dessous du rail conducteur à réparer ou à remplacer (27a à 27f, 28a à 28f, 29a à 29f) est égalisé au moyen d'un dispositif de décharge (50 ; 60) en appliquant une force de traction sur le rail conducteur concerné (27a à 27f, 28a à 28f, 29a à 29f).

2. Procédé selon la revendication 1,
**caractérisé en ce que**
les poids de tous les rails conducteurs (27a à 27f, 28a à 28f, 29a à 29f) d'une région partielle de rail conducteur (27, 28, 29) dans laquelle se trouve le rail conducteur à réparer ou à remplacer (27a à 27f, 28a à 28f, 29a à 29f), sont égalisés au moyen du dispositif de décharge (50 ; 60).

3. Procédé selon la revendication 2,
**caractérisé en ce que**
les poids des rails conducteurs (27a à 27f, 28a à 28f, 29a à 29f) des régions partielles de rails conducteurs (27, 28, 29) qui se trouvent en dessous ou au-dessus de la région partielle de rail conducteur (27, 28, 29) avec le rail conducteur à réparer ou à remplacer (27a à 27f, 28a à 28f, 29a à 29f) sont en outre également égalisés.

4. Procédé selon l'une quelconque des revendications 1 à 3,
**caractérisé en ce**
**qu'**au moins un élément de fixation élastique (38) associé au dispositif de fixation (35) du rail conducteur à réparer ou à remplacer (27a à 27f, 28a à 28f, 29a à 29f) est remplacé conjointement avec le rail conducteur concerné (27a à 27f, 28a à 28f, 29a à 29f).

5. Procédé selon l'une quelconque des revendications 1 à 4,
**caractérisé en ce que**
l'égalisation des poids des rails conducteurs (27a à 27f, 28a à 28f, 29a à 29f) se produit par décharge des rails conducteurs (27a à 27f, 28a à 28f, 29a à 29f) depuis la direction du dispositif générateur (16) dans la direction du poste de réseau (22), **en ce que** les poids des rails conducteurs (27a à 27f, 28a à 28f, 29a à 29f) sont égalisés les uns après les autres et **en ce qu'**à la fin de la réparation ou du remplacement du rail conducteur (27a à 27f, 28a à 28f, 29a à 29f), la sollicitation pondérale des rails conducteurs (27a à 27f, 28a à 28f, 29a à 29f) du fait de leur propre poids s'effectue depuis la direction du poste de réseau (22) dans la direction du dispositif générateur (16) **en ce que** les rails conducteurs (27a à 27f, 28a à 28f, 29a à 29f) sont amenés les uns après les autres hors d'engagement fonctionnel avec le dispositif de décharge (50 ; 60).

6. Dispositif pour mettre en oeuvre un procédé pour réparer ou remplacer des rails conducteurs sur des éoliennes selon l'une quelconque des revendications 1 à 5,
**caractérisé en ce que**
l'on prévoit un dispositif de décharge (50 ; 60) qui peut être connecté au dispositif de fixation (35) d'un rail conducteur (27a à 27f, 28a à 28f, 29a à 29f) et qui présente au moins un dispositif de serrage (56, 57) avec lequel le poids d'un rail conducteur (27a à 27f, 28a à 28f, 29a à 29f) peut être égalisé par l'application d'une force de traction sur le rail conducteur (27a à 27f, 28a à 28f, 29a à 29f).

7. Dispositif selon la revendication 6,
**caractérisé en ce que**
le dispositif de décharge (60) peut être fixé à un boulon de fixation (36) pour la fixation du dispositif de fixation (35) pour le rail conducteur (27a à 27f, 28a à 28f, 29a à 29f).

8. Dispositif selon la revendication 6,
**caractérisé en ce que**
le dispositif de décharge (50) présente au moins un moyen de support (53, 54) qui peut être fixé en particulier au niveau de la région supérieure de la tour (11) ou du dispositif de générateur (16) de l'éolienne (10) et **en ce que** l'au moins un moyen de support (53, 54) présente, pour une pluralité de rails conducteurs (27a à 27f, 28a à 28f, 29a à 29f), de préférence pour la totalité des rails conducteurs (27a à 27f, 28a à 28f, 29a à 29f) à chaque fois au moins un dispositif de serrage (56, 57) pour l'égalisation du poids, lequel peut être connecté au dispositif de fixation (35) du rail conducteur respectif (27a à 27f, 28a à 28f, 29a à 29f).

9. Dispositif selon l'une quelconque des revendications 6 à 8,
**caractérisé en ce que**
le dispositif de décharge (50 ; 60) pour chaque rail conducteur (27a à 27f, 28a à 28f, 29a à 29f) présente deux dispositifs de serrage (56, 57) pouvant être connectés au dispositif de fixation (35) et **en ce que** les deux dispositifs de serrage (56, 57) sont disposés symétriquement par rapport à l'axe longitudinal du rail conducteur (27a à 27f, 28a à 28f, 29a à 29f).

10. Agencement, constitué d'une éolienne (10) comprenant une pluralité de rails conducteurs (27a à 27f, 28a à 28f, 29a à 29f) et au moins un dispositif selon l'une quelconque des revendications 6 à 9.
